Europäisches Patentamt

European Patent Office

Office européen des brevets

(19)

(11) Veröffentlichungsnummer : **0 101 904**
**B1**

(12) EUROPÄISCHE PATENTSCHRIFT

(45) Veröffentlichungstag der Patentschrift :
28.05.86

(51) Int. Cl.⁴ : **C 08 L 27/06**

(21) Anmeldenummer : **83107182.4**

(22) Anmeldetag : **22.07.83**

(54) Formmassen aus Vinylchloridpolymerisat, bestimmten Copolymerisaten und polymeren Weichmachern mit hoher Alterungsbeständigkeit.

(30) Priorität : **04.08.82 DE 3229131**

(43) Veröffentlichungstag der Anmeldung :
**07.03.84 Patentblatt 84/10**

(45) Bekanntmachung des Hinweises auf die Patenterteilung : **28.05.86 Patentblatt 86/22**

(84) Benannte Vertragsstaaten :
**DE FR GB IT SE**

(56) Entgegenhaltungen :
FR-A- 2 011 501
GB-A- 976 360
US-H- 589 966

(73) Patentinhaber : **BAYER AG**
**Konzernverwaltung RP Patentabteilung**
**D-5090 Leverkusen 1 Bayerwerk (DE)**

(72) Erfinder : **Lindner, Christian, Dr.**
**Riehlerstrasse 200**
**D-5000 Köln 60 (DE)**
Erfinder : **Ott, Karl-Heinz, Dr.**
**Paul-Klee-Strasse 54**
**D-5090 Leverkusen 1 (DE)**
Erfinder : **Uerdingen, Walter, Dr.**
**Humperdinckstrasse 41**
**D-5090 Leverkusen 1 (DE)**
Erfinder : **Braese, Hans-Eberhard**
**Kaethe-Kollwitz-Strasse 3**
**D-5000 Köln 71 (DE)**
Erfinder : **Hurnik, Helmut**
**Bonnerstrasse 5**
**D-5090 Leverkusen 3 (DE)**

## Beschreibung

Die Erfindung betrifft thermoplastische Formmassen zur Herstellung von Folien mit verbessertem Alterungsverhalten auf der Basis von Kompositionen, die Vinylchloridpolymerisate, bestimmte ABS-Copolymerisate, bestimmte harzartige Copolymerisate, spezielle Acrylestercopolymerisate sowie gegebenenfalls Diencopolymerisate enthalten.

Vinylchloridpolymerisate insbesondere Polyvinylchlorid (PVC) stellen weitverbreitete Rohstoffe zur Herstellung verschiedenster Kunststoffartikel dar. Durch Kombination der Vinylchloridpolymerisate mit anderen Stoffen läßt sich bekannterweise das charakterisistische Eigenschaftbild der Vinylchloridpolymerisate in weiten Bereichen variieren bzw. modifizieren. So eignen sich z. B. nicht oder nur gering modifiziertes PVC (sogenanntes « Hart-PVC ») zur Herstellung von Formkörpern. Diese Formmassen zeigen ein mittleres Verarbeitungsverhalten, mittlere Wärmeformbeständigkeit bei mäßiger Zähigkeit und relativ niedriger Flexibilität.

Durch Kombination von z. B. Polyvinylchlorid mit sogenannten Weichmachern mit niedrigen bzw. mittleren Molekulargewichten Kunststoffartikel lassen sich Kunststoffartikel herstellen (« Weich-PVC-Typen »), die bei Gebrauchstemperaturen hohe Flexibilität und Elastizität besitzen. Als Weichmacher sind hierfür z. B. Phthalate, Epoxidverbindungen, aliphatische Diester, Phosphate, Polyester mit Molekulargewichten bis zu etwa 3000, Trimellitate, Citrate oder bestimmte aliphatische, gegebenenfalls chlorierte Kohlenwasserstoffe geeignet. Diese Weichmacher sind bekannt (z. B. « Encyclopedia of PVC », Mariel Dekker, INC, New York, 1976).

Kombinationen aus sogenannten polymeren Weichmachern (Polymeren mit höheren Molekulargewichten) mit Vinylchloridpolymerisaten erlauben weiterhin die Herstellung von Weich-PVC-Formkörpern mit verbesserten mechanischen Eigenschaften, z. B. eine verbesserte Abriebfestigkeit, Elastizität, Lösungsmittelbeständigkeit und gegebenenfalls eine bessere Flammfestigkeit.

Solche polymeren Weichmacher sind z. B. teilvernetzte Butadien-Acrylnitril-Copolymerisate, mit bis zu 30 % Acrylnitril und Mooney-Viskotitäten (ML 4, 100 °C, (DIN 53523) von 60-100, z. B. EP 0 005 736), bestimmte Polyurethane (DE-PS 1 193 241) sowie spezielle, in organischen Lösungsmitteln lösliche Ethylen-Vinylacetat-Copolymerisate (z. B. EP 0 005 736).

Durch Kombination beispielsweise von Vinylchloridpolymerisaten mit Pfropfpolymeren (z. B. Styrol, α-Methylstyrol, Acrylnitril und/oder Methylmethacrylat gepfropft auf kautschukartige Substrate wie Butadienpolymerisate, Acrylatkautschuk) oder Pfropfpolymerisaten (Vinylchlorid gepfropft auf spezielle Ethylen-Vinylacetat-Copolymere mit z. B. 45 % Vinylacetat und 55 % Ethylen) oder durch Kombination mit anderen Polyethylenderivaten lassen sich Kunststoffblends hoher Kerbschlagzähigkeit herstellen.

Die Kautschukkomponenten der Pfropfpolymermodifikatoren sind vorzugsweise von anderer Natur (im Vergleich zu einigen der oben genannten Polymerweichmachern) als die Kautschuke, die als Polymerweichmacher eingesetzt werden können.

Diese Unterschiede können zum Beispiel durch chemische Zusammensetzung, Vernetzungscharakteristiken, Teilchenmorphologie und der Pfropfcharakteristik gegeben sein.

Weiterhin kann durch spezielle Modifikatoren die Wärmestandfestigkeit von Vinylchloridpolymerisaten verbessert werden. Hierfür geeignete Modifikatoren sind z. B. Copolymere des Styrols, α-Methylstyrols, Acrylnitrils und Methylmethacrylats.

Um eine technische Verarbeitung dieser Vielzahl von Polymerkombinationen zu ermöglich, ist eine wirksame Stabilisierung der Systeme, z. B. gegen thermischen, photolytischen und chemischen Abbau nötig.

Als Stabilisatoren und Verarbeitungshilfmittel eignen sich z. B. Ba/Cd-, Pb-, Sn- und Zn-Stabilisatoren oder organische Stabilisatoren sowie phenolische, gegebenenfalls S- oder P-haltige Antioxidantien, Epoxidverbindungen, Wachse, niedermolekulare und hochmolekulare Gleitmittel. Außerdem sind Additive erforderlich, die die Verarbeitungsbedingungen des jeweiligen Systems optimieren. Solche Hilfsmittel und deren Verarbeitungsbedingungen werden beispielsweise in « Kunststoff Handbuch » Carl Hanser Verlag, München (1963) beschrieben.

Für spezielle Anwendungen (z. B. als Folie zum Laminieren und kaschieren) sind Vinylchloridpolymerisate enthaltende Kompositionen mit ganz bestimmtem Anforderungsprofil erforderlich : Kombination von guter Zähigkeit, Bruchfestigkeit, Flexibilität, Elastizität (auch bei tieferen Temperaturen), Wärmestandfestigkeit, Abriebfestigkeit, Haftfestigkeit ; Möglichkeiten der Verarbeitung zu flächenartigen Gebilden durch Extrusion, Kalandrieren, Spritzgießen, Tiefziehen, Laminierbarkeit mit anderen Materialien. Die Kompositionen sollen außerdem gute Migrationsbeständigkeit, Dimensionsstabilität und spezielle Schrumpfeigenschaften aufweisen. Weiterhin sollen sie eine ästhetische Oberflächenbeschaffenheit besitzen und sich durch spezielle Oberflächenbehandlungsverfahren zu Gebilden mit dekorativem Aussehen verarbeiten lassen. Außerdem wird noch eine komfortable Griffeigenschaft solcher Materialien gefordert.

Dieses komplexe Anforderungsprofil kann durch thermoplastische Verarbeitung z. B. folgender Komposition in bestimmten Mengenverhältnissen erhalten werden Vinylchloridpolymerisat (z. B. PVC), Weichmacher mit niedrigem Molekulargewicht (z. B. Dioctyladipat, Phthalate), Pfropfpolymerisate (z. B. ABS-Pfropfpolymere), Polymerweichmachern (z. B. Butadien-Acrylnitril-Kautschuk) und eine komplexe Anzahl von Stabilisatoren für die verschiedenen Komponenten und die Gesamtmischung.

Solche Polymerisatkompositionen besitzen anwendungstechnische Nachteile, welche die Einsatzbreite daraus hergestellter Formkörper (insbesondere als Folien) einschränken.

Solche Nachteile sind z. B. unbefriedigende Beständigkeit gegen Alterungseinflüsse durch Licht, Wärme, Chemikalien, sonstige artfremde Medien sowie mögliche chemische Wechselwirkungen der verschiedenen Komponenten miteinander. Diese Alterungen machen sich im Verlust mechanischer und visueller Eigenschaften bemerkbar (Versprödung, Farbtonverschlechterung, Ausschwitzungen etc.).

Es wurde nun gefunden, daß man Folien mit verbesserter Alterungsbeständigkeit aus speziellen thermoplastischen Formmassen herstellen kann, die das obengenannte komplexe anwendungstechnische Anforderungsprofil erfüllen.

Gegenstand der Erfindungen sind demnach thermoplastische Formmassen die enthalten :

A. 25-50 Gew.-Teile eines Vinylchloridhomo- oder -copolymerisates,

B. 25-50 Gew.-Teile eines ABS-Polymerisates, hergestellt durch Pfropfpolymerisation von

1. 30-95 Gew.-Teilen eines Monomergemisches aus Styrol, Methylmethacrylat oder α-Methylstyrol, einzeln oder in Abmischungen einerseits und Acrylnitril andererseits im Verhältnis 90 : 10 bis 60 : 40, auf

2. 70-5 Gew.-Teile eines Butadien-Homo- oder -Copolymerisates mit einem Comonomeranteil ≤ 35 Gew.-%, das einen Gelgehalt ≥ 50 % aufweist und, wobei

3. der resultierende gepfropfte Kautschuk eine mittlere Teilchengröße von 0,05-5 μm aufweist,

C. 0-10 Gew.-Teile eines harzartigen, thermoplastischen Copolymerisates aus einem Styrol-Acrylnitril- bzw. Methylmethacrylat-Acrylnitril-Copolymeren, das einen Staudinger Index $(\eta)$, von ≥ 3, vorzugsweise 4 dl/g, besitzt und dessen $(\eta)$-Wert in jedem Fall über dem des im Grundpolymeren B. enthaltenden Copolymerisates liegt,

D. 5-40 Gew.-Teile eines Copolymerisates aus

1. 10-99,9 Gew.-Teilen eines Acrylesters eines $C_1$-$C_{15}$-Alkohols,

2. 0-90 Gew.-Teilen wenigstens eines bi- oder polyfunktionellen Monomeren mit konjugierten oder unkonjugierten Doppelbindungen im Molekül und gegebenenfalls

3. bis zu 40 Gew.-%, bezogen auf die Summe von 1. und 2., weiterer Monomerer wie Acrylnitril, Vinylacetat und/oder Methacrylsäurealkylestern, die von $C_1$-$C_8$-Alkoholen abgeleitet sind, wobei das Copolymerisat unvernetzt oder partiell vernetzt ist und wobei das Copolymerisat bzw. die unvernetzten Anteile des Copolymerisats mittlere Molekulargewichte im Bereich von 1 000-2 000 000 aufweisen, und

E. 3-30 Gew.-Teile eines Copolymerisats, das hergestellt ist aus

1. 60-95 Gew.-Teilen eines Monomeren mit zwei konjugierten olefinischen Doppelbindungen und/oder eines Acrylesters eines $C_1$-$C_6$-Alkohols,

2. 5-40 Gew.-Teilen Styrol und/oder Acrylnitril und/oder Methacrylsäuremethylester, gegebenenfalls

3. bis zu 10 Gew.-Teilen eines vernetzend wirkenden bis- oder polyfunktionellem Monomeren oder Polymeren mit konjugierten oder nicht konjugierten Doppelbindungen und

4. bis zu 30 Gew.-Teilen weiterer Monomerer wie z. B. Vinylacetat, (Meth)Acrylsäure oder Vinylether,

wobei die Komponente E wenigstens in einem Parameter von der Komponente D verschieden sein soll und wobei das Copolymerisat E einen Gelgehalt von ≥ 70 % aufweisen soll.

Komponente A enthält mindestens 50 Gew.-% Vinylchlorid.

Das Butadien-Copolymerisat der Komponente B hat einen Comonomeranteil ≤ 35 Gew.-% und einen Gelgehalt ≥ 50 %.

Der Staudingerindex der Komponente C wird in Dimethylformamid bei 25 °C gemessen.

Als Unterscheidungsparameter für die Komponente E dienen chemische Zusammensetzung, Vernetzung, Gelgehalt und Quellungsindex.

Bevorzugt geeignete Formmassen enthalten 25-50 Gew.-Teile Komponente A., 25-50 Gew.-Teile Komponente B., 1,5-3 Gew.-Teile Komponente C., 15-35 Gew.-Teile Komponente D. und 5-20 Gew.-Teile Komponente E.

Vinylchloridpolymerisat A im Sinne der Erfindung sind vorzugsweise Polyvinylchlorid (PVC), Copolymerisate des Vinylchlorids mit bis zu 50 Gew.-% copolymersierbaren Verbindungen, vorzugsweise mit bis zu 20 Gew.-% copolymerisierbaren Verbindungen, sowie Pfropfpolymerisate von Vinylchlorid auf Ethylen-Vinylacetat-Copolymerisate (vorzugsweise mit Vinylacetatgehalten ≤ 50 Gew.-%).

Mit Vinylchlorid copolymerisierbare Verbindungen sind z. B. :

Vinylester mit 1-8 C-Atomen im Alkylrest der Carbonsäure, wie Vinylacetat, Vinylpropionat, Alkylacrylate, Alkylmethacrylate, Alkylvinylether, Propylen, Maleinsäureanhydrid, Halbester und Diester der Maleinsäure mit aliphatischen Alkoholen mit 1-8 C-Atomen im Alkoholrest.

ABS-Polymerisate im Sinne der Erfindung sind Pfropfprodukte, die hergestellt werden durch Pfropfpolymerisation von

1. 30-95 Gew.-Teilen, insbesondere 60-95 Gew.-Teilen eines Monomergemisches aus Styrol, Methylmethacrylat oder α-Methylstyrol, einzeln oder in Abmischungen und Acrylnitril im Gew.-Verhältnis 90 : 10 bis 60 : 40, vorzugsweise 75 : 25 bis 65 : 35, (besonders bevorzugt sind Monomergemische, die kein Methylmethacrylat enthalten), auf

2. 70-5 Gew.-Teile, vorzugsweise 5-40 Gew.-Teile eines Butadien-Homo- oder -Copolymerisats mit einem Comonomeranteil ≤ 35 Gew.-%, welches Gelgehalte ≥ 50 %, vorzugsweise ≥ 80 % aufweist, wobei der eigentliche Pfropfkautschuk eine mittlere Teilchengröße von 0,05-5 μm (vorzugsweise 0,1-0,5 μm) ($d_{50}$-Werte) besitzt. (Besonders bevorzugt sind ABS-Pfropfprodukte auf hochvernetzte Butadienhomopolymerisate einer Teilchengröße von 0,3-0,5 μm).

Harzartige, thermoplastische Copolymerisate im Sinne der Erfindung sind Styrol-Acrylnitril-Copolymerisate bzw. Methylmethacryl-Acrylnitril-Copolymere, die einen Staudinger Index [η] von ≥ 3, vorzugsweise = 4 dl/g aufweisen.

Die Staudinger Indices dieser Thermoplastkomponente sind höher als die Staudinger Indices der im Grundpolymeren B enthaltenden Copolymerisate (d. h. der im ABS-Pfropfcopolymer entstandenen Harzkomponenten).

Bevorzugt sind Methylmethacrylat-Acrylnitril-Copolymere als Komponente C mit 5-50 Gew.-% eingebautem Acrylnitril, besonders bevorzugte Polymere C) bestehen aus 15-40 Gew.-% Acylnitril und 85-60 Gew.-% Methylmethacrylat. Sie besitzen einen unvernetzten Aufbau, erkenntlich an ihrer Löslichkeit in geeigneten organischen Lösungsmitteln (z. B. Dimethylformamid). Diese Copolymere können gegebenenfalls kleinere Anteile von Methacrylsäureester von $C_2$-$C_8$-Alkoholen sowie Acrylsäureester von $C_1$-$C_6$-Alkoholen eingebaut enthalten.

Die Komponenten D im Sinne der Erfindung stellen Copolymerisate dar aus

D 1. 10-99,9 Gew.-Teilen (vorzugsweise 70-99,9 Gew.-%) eines Acrylesters eines $C_1$-$C_{15}$-Alkohols wie Butylacrylat, Hexylacrylat, Methylacrylat, Ethylacrylat ; Besonders bevorzugt ist Butylacrylat oder Ethylhexylacrylat,

D 2. 0-90 Gew.-Teilen (vorzugsweise 0,1-30 Gew.-Teilen) wenigstens eins bi- oder polyfunktionellen Monomeren mit konjugiert oder nichtkonjugierten Doppelbindungen im Molekül (wie z. B. Divinylbenzol, Alkylen-di(meth)acrylat, Triallyl(iso)cyanurat, Butadien, Isopren, Allyl(meth)acrylat und gegebenenfalls,

D 3. bis zu 40 Gew.-%, insbesondere bis zu 30 Gew.-%, bezogen auf die Summe von D 1. und D 2., weiterer Monomerer wie Acrylnitril, Vinylacetat und/oder Methacrylsäurealkylestern von $C_1$-$C_8$-Alkoholen, vorzugsweise Methylmethacrylat ; Alle Copolymerisate D können unvernetzt oder partiell vernetzt vorliegen ; die löslichen Copolymerisate haben Molekulargewichte von 1 000-2 000 000, vorzugsweise Molekulargewichte ≥ 20 000 ; besonders bevorzugt sind Copolymerisate D, bestehend aus 15-35 Gew.-Teilen Acrylnitril, gegebenenfalls im Gemisch mit Ethylhexylacrylat und 0,1-10 Gew.-Teilen polyfunktioneller Monomerer ; diese Produkte sind bevorzugt partiell vernetzt, besitzen Gelgehalte ≥ 30 % und Quellungsindices (gemessen in Dimethylformamid) im Bereich von 10-60, vorzugsweise im Bereich von 15-60, besonders bevorzugt im Bereich von 15-40.

Die Komponenten E im Sinne der Erfindung sind Copolymerisate, die hergestellt werden aus

E 1. 60-95 Gew.-Teilen (vorzugsweise 65-85 Gew.-Teilen) eines Monomeren mit zwei konjugierten olefinischen Doppelbindungen (z. B. Butadien, Isopren, Chloropren) und/oder eines Acrylesters eines $C_1$-$C_6$-Alkohols (z. B. Ethyl-, Butyl-, Hexylacrylat),

E 2. 5-40 Gew.-Teilen vorzugsweise 15-35 Gew.-Teilen Styrol und/oder Acrylnitril und/oder Methacrylsäuremethylester, gegebenenfalls,

E 3. bis zu 10 Gew.-Teilen eines vernetzend wirkenden bi- oder polyfunktionellen Monomeren oder Oligomeren oder Polymeren mit konjugierten oder nicht konjugierten Doppelbindungen und

E 4. bis zu 30 Gew.-Teilen weiterer Monomerer wie z. B. Vinylacetat (Meth)Acrylsäure, Vinylether, Methoxymethacrylamid, vorzugsweise Vinylacetat ; derartige Copolymerisate sollen Gelgehalte ≥ 70 % aufweisen und in wenigstens einem Parameter (chemische Zusammensetzung, Vernetzung, Gelgehalt, Quellungsindex) vom Copolymerisat D verschieden sein.

Bevorzugte Copolymerisate sind Copolymere aus 10-35 Gew.-Teilen Acrylnitril, 90-65 Gew.-Teilen Butadien mit Gelgehalten ≥ 70 % oder Copolymerisate auf 5-40 Gew.-Teilen Acrylnitril, 60-95 Gew.-Teilen Acrylsäurealkylester und 0,4-10 Gew.-Teilen eines vernetzend wirkenden Agenz (letztere können polyfunktionnelle Vinyl- oder Allylmonomere sein, wie Butadien, Isopren, Dienoligomere Polydiene, $C_2$-$C_{30}$-Alkylene mit endständigen polymerisierbaren Gruppen (vorzugsweise aus der Reihe der (Meth)Acrylsäureester)) oder auch Polybutadienkerne in vernetzter Form, auf die Alkylacrylat im Gemisch mit Acrylnitril aufgepfropft wurden ; diese bevorzugten Copolymere können anteilmäßig Vinylacetat eingebaut enthalten.

Die Komponenten E müssen sich wenigstens in einem Parameter von den Komponenten D unterscheiden. Die unterschiedliche Wirkung der Komponenten E und D in der erfindungsgemäßen Komposition kann durch die chemische Zusammensetzung und die Stärke der Vernetzung (oder Nichtvernetzung) eingestellt werden, ausgedrückt durch Gelgehalt, Quellungsindex, Molekulargewicht des löslichen Anteils.

Liegen die Komponenten D und E in einer vernetzten teilchenförmigen Form vor, so spielt bei bestimmten Produktzusammensetzungen auch die Teilchengröße eine Rolle, beispielsweise für die Wirkung der Komponente E.

Die Komponenten D und E der erfindungsgemäßen Formmassen können auch dann zur Herstellung der erfindungsgemäßen Formmassen verwendet werden, wenn sie als spezielle Pfropfpolymere vorliegen (Pfropfpolymere von den die Komponente A bildenden Vinylchloridpolymeren auf die Polymeren D und E als Pfropfgrundlage).

Die erfindungsgemäß geeigneten Vinylchloridpolymerisate können nach bekannten technischen

4

Verfahren hergestellt werden, z. B. durch Emulsions-, Suspensions-, bzw. Masse-Polymerisationsprozesse.

Zur Herstellung der geeigneten ABS-Polymerisate können Verfahren wie Emulsions-, Suspensions- oder Fällungspolymerisationsprozesse herangezogen werden. Besonders geeignete Prozesse sind Emulsions- und Suspensionspolymerisationen. Besonders bevorzugte ABS-Polymerisate werden erhalten, indem man in einer ersten Stufe einen Butadien-(Copolymer)-Kautschuk in wässriger Emulsion (in Anwesenheit von Emulgatoren, Radikalbildnern, Reglern, etc.) radikalisch zu einem wässrigen Latex einer Latexteilchengröße von ca. 0,05-5 μm polymerisiert (gegebenenfalls in Kombination mit bekannten Latexteilchenagglomerisationsverfahren) und dann in Gegenwart dieses Kautschuklatex die genannten Vinylmonomeren in einer zweiten Stufe polymerisiert.

Im Anschluß an die Pfropfpolymerisation werden Stabilisatoren (z. B. vom Phenoltyp) zugesetzt.

Die Polymerisate lassen sich nach bekannten Verfahren isolieren z. B. durch Koagulation mittels Elektrolyten oder Lösungsmitteln. Die Polymerprodukte werden durch Trocknungsprozesse entwässert.

Die geeigneten Thermoplastzusätze C können durch Emulsions- oder Suspensionsverfahren, in Gegenwart von bekannten Oberflächenraktionen Substanzen und Initiatoren (z. B. Radikalbildnern hergestellt werden). Man kann solche Polymere entweder aus der anfallenden Latexform isolieren (z. B. durch Sprühtrocknung oder Elektrolytkoagulation) oder die anfallenden Latices werden mit anderen Latices der erfindungsgemäßen Kompositonsbestandteile vermischt und gemeinsam koaguliert.

Solche sogenannten Co-Koagulationsverfahren führen zu Komponentenmischungen, die zu Formmassen mit besonders guten Eigenschaften führen (z. B. verbessertes Verarbeitungsverhalten der erfindungsgemäßen-Kompositionen).

Die erfindungsgemäßen Komponenten D können nach bekannten Verfahren durch radikalische Copolymerisationsprozesse hergestellt werden wie z. B. durch Emulsionspolymerisationen, Lösungs-, Masse- oder Suspensionspolymerisationen sowie Kombinationen aus Emulsions- und Suspensionspolymerisationen. Besonders bevorzugt ist die Emulsionspolymerisation. Die Polymerisate werden im Anschluß an die Herstellung nach bekannten Verfahren isoliert.

Ebenso wie bei den anderen Komponenten der erfindungsgemäßen Formmassen können die Einzelkomponenten während oder nach dem Herstellprozeß mit üblichen Antioxidantien, Thermostabilisatoren oder Lichtschutzmitteln ausgerüstet bzw. stabilisiert werden.

Die Komponenten E werden so hergestellt, daß eine Vernetzung des Materials auf Gelgehalte ⩾ 70 % möglich ist. Ein bevorzugtes Herstellverfahren für E stellt demnach die Emulsionspolymerisation, vorzugsweise in wässrigen Medien dar. Andere Arten von Herstellverfahren sind solche, bei denen man z. B. eine Lösungspolymerisation durchführt (unter Ausbildung eines im wesentlichen unvernetzten Materials). Anschließend wird durch Einwirkung von Vernetzern die notwendige Vernetzung herbeigeführt, gegebenenfalls in Substanz oder nach Dispergierung des durch Lösungspolymerisation erhaltenen Vorkondensates. Bei solchen Verfahren können ·übliche Radikalbildner sowie geeignete Strahlen Verwendung finden. Ein besonders geeignetes Verfahren stellt die wässrige Emulsionspolymerisation mit anschließender Koagulation der anfallenden wässrigen Latices dar.

Die erfindungsgemäßen Formmassen können nach üblichen Methoden der Kunststoffverarbeitung verarbeitet werden, beispielsweise durch Spritzguß, Extrusion, Hohl-Körperblasen, Tiefziehen, Kalandrieren usw. Dabei assen sich diverse Formkörper herstellen. Die Formmassen eignen sich vorzugsweise für Folien.

Wie aus den nachfolgenden Beispielen hervorgeht, besitzen diese Folien ein wesentlich verbessertes Alterungsverhalten, wenn man Weichmacher niedrigen, mittleren oder hohen Molekulargewichtes durch spezielle Acrylestercopolymerisate unter Einhaltung der erfindungsgemäßen Formmassenrezeptur substituiert.

Daß dieser Effekt überraschend war und nicht nur vom Molekulargewicht der weichmachenden Komponente D und E abhängt, wird durch den Vergleich des Alterungsverhaltens von Formmassen gezeigt, die einerseits erfindungsgemäß geeignete Acrylestercopolymerisate oder andererseits übliche Weichmacher (z. B. Polyesterweichmacher) enthalten.

Eine weitere Verbesserung des Alterungsverhaltens wird durch den Ersatz von Butadienkautschuken E durch spezielle vernetzte Acrylkautschuke E erreicht.

Die Grenzviskositäten (Staudinger-Indices) wurden in dem jeweiligen angegebenen Lösungsmittel bestimmt. Zur Definition des Staudinger-Index, Quellungsindex, Gelgehalte siehe M. Hoffman, H. Krömer, R. Kuhn, « Polymeranalytik I und II » Georg-Theime Verlag (Stuttgart) (1977).

Die Pfropfkautschukteilchengrößen sind $d_{50}$-Werte (Durchmesser) (zur Definition siehe Ultrazentrifugen-Messungen : W. Scholtan, H. Lange, Kolloidz. und Z. Polymere 250 (1972) 783-796).

Beispiele

Zur Herstellung der in Tabelle 2 beschrieben Formmassen werden Gew.-Teile Polyvinylchlorid (K-Wert 70) mit unterschiedlichen Mengen verschiedener Produkte (Tabelle 1) kombiniert. Als notwendiger Stabilistator- Gleitmittelzusatz werden in jedem Fall 2 Gew.-% Ba/Cd-Laurat (fest), 0,3 Gew.-% phenolisches Antioxidans (fest) und 0,2 Gew.-% Esterwachs zugesetzt. Die Formmassen werden auf einem Mischwalzwerk 10 Minuten bei 180 °C homogenisiert und bei 190 °C Prüfkörpers verpresst.

Tabelle 1 : Eingesetzte Polymerisate

Produkt 1.1 : Mischung aus B + C

Mischung aus 94 Gew.-Teilen eines ABS-Polymerisates und 6 Gew.-Teilen eines Methylmethacrylat-Acrylnitril-Copolymerisates, enthaltend 32 Gew.-% Acrylnitril, mit einem Staudingerindex von 5 dl/g (in Dimethylformamid (DMF) bei 25 °C) ; das ABS-Polymerisat, hergestellt durch Emulsionspolymerisation, enthält 30 Gew.-% Polybutadien mit einem Gelgehalt von $\geqslant 70\ \%$ und einer Teilchengröße von 0,4 μm.

Produkt 1.3 : E

Durch Emulsionspolymerisation bei 65 °C wird entsprechend folgender Rezeptur ein Latex enthalten, aus dem durch Koagulation mit $MgSO_4$ ein kautschukartiges Polymer erhalten wird :

2 585 Gew.-Teile Wasser
27 Gew.-Teile $Na$-$C_{14}$-$C_{16}$-Alkylsulfonat
2 Gew.-Teile Kaliumperoxidisulfat
1 182 Gew.-Teile Butylacrylat
393 Gew.-Teile Acrylnitril
4 Gew.-Teile Triallylcyanurat

Das Polymer weist einen Gelgehalt (in DMF) von 92 und einen Quellungsindex von 19,8 auf.

Produkt 1.4 : E

Das Polymerisat besteht aus 29 Gew.-% Acrylnitril und 71 Gew.-% Butadien, stellt ein Emulsionspolymerisat dar; und weist einen Gelgehalt von $\geqslant 60\ \%$ auf.

Produkt 1.5 : Vergleichspolymerweichmerches

Der Adipatcarbonatmischester wurde hergestellt durch Umsetzung von Adipinsäure -Hexandiol-Neopentylglykol-polyesterdiol (MG ca. 2000) mit Diphenylcarbonat und weist ein Molekulargewicht von ca. 100 000 auf.

Produkt 1.2 : D

Durch Emulsionspolymerisation bei 65 °C wird entsprechend folgender Gesamtrezeptur ein Latex erhalten, aus dem durch Koagulation mit $MgSO_4$ ein kautschukartiges Polymer erhalten wird :

2 590 Gew.-Teile Wasser
35 Gew.-Teile $Na$-$C_{14}$-$C_{16}$-Alkylsulfonat
2 Gew.-Teile Kaliumperoxidisulfat
1 417 Gew.-Teile Butylacrylat
158 Gew.-Teile Acrylnitril
1,0 Gew.-Teile Triallylcyanurat

Das Polymer weist einen Gelgehalt (in DMF) von 63 und einen Quellungsindex von 40 auf.

Produkt 1.7 : D

Durch Emulsionspolymerisation bei 65 °C wird entsprechend folgender Rezeptur ein Latex erhalten, aus dem durch Koagulation mit $MgSO_4$ ein kautschukartiges Polymer erhalten wird :

2 590 Gew.-Teile Wasser
25 Gew.-Teile $Na$-$C_{14}$-$C_{16}$-Alkylsulfonat
2 Gew.-Teile Kaliumperoxidisulfat
1 181 Gew.-Teile Butylacrylat
300 Gew.-Teile Acrylnitril
7 Gew.-Teile $NaHCO_3$

Das Polymer ist löslich in organischen Lösungsmitteln und weist einen Staudingerindex (in DMF) von 1,2 dl/g auf.

Tabelle 2

| | Beispiel 1 | | Beispiel 2 | | Beispiel 3 | | Beispiel 4 | | Beispiel 5 |
|---|---|---|---|---|---|---|---|---|---|
| Produkt | Gew.Tl.(*) | Produkt | Gew.Tl. | Produkt | Gew.Tl. | Produkt | Gew.Tl. | Produkt | Gew.Tl. |
| PVC | 40 | PVC | 30 | PVC | 30 | PVC | 30 | PVC | 30 |
| 1.1 | 35 | 1.1 | 45 | 1.1 | 45 | 1.1 | 45 | 1.1 | 45 |
| Adipin-säure-polyester | 18 | 1.2 | 40 | 1.2 | 35 | 1.5 | 25 | 1.7 | 30 |
| 1.4 | 8 | 1.4 | 10 | 1.3 | 10 | 1.4 | 10 | 1.3 | 10 |
| Zugfestig-keit MPa, DIN 53455 | 19,2 | | 22,7 | | 23,1 | | 18,2 | | 22,0 |
| Dehnung % DIN 53455 | 182 | | 312 | | 285 | | 118 | | 300 |
| Vicat-Wert °C DIN 53460, Verfahren A | 70 | | 82 | | 85 | | 82 | | 79 |
| Shore-Härte D DIN 53505 | 51 | | 52 | | 55 | | 54 | | 51 |
| Weiter-N/mm reißfestig-keit DIN 53515 | 63 | | 65 | | 65 | | 80 | | 66 |
| Dehnung % nach Alterung (120 °C, 21d) DIN 53455 | 5 | | 125 | | 187 | | 55 | | 177 |

\* Gewichtsteile

Wie aus den Beispielen 1-5 hervorgeht, besitzen die erfindungsgemäßen Formmassen 2, 3 und 5 ein ähnliches oder verbessertes Eigenschaftprofil im Vergleich zur Probe 1 und 4. Die Dehnung des Materials nach Alterungstests ist bei den erfindungsgemäßen Formmassen wesentlich erhöht.

**Patentansprüche**

1. Thermoplastische Formmassen aus

A. 25-50 Gew.-Teilen eines Vinylchloridhomo- oder copolymerisates mit einem Gehalt von mindestens 50 Gew.% Vinylchlorideinheiten,

B. 25-50 Gew.-Teilen eines ABS-Pfropfproduktes, hergestellt durch Pfropfpolymerisation von

1. 30-95 Gew.-Teilen eines Monomergemisches aus Styrol, Methylmethacrylat oder $\alpha$-Methylstyrol, einzeln oder in Abmischungen einerseits und Acrylnitril andererseits im Verhältnis 90 : 10 bis 60 : 40, auf

2. 70-5 Gew.-Teile eines Butadien-Homo- oder -Copolymerisates, mit einem Comonomergehalt $\leqslant$ 35 Gew.%, das einen gelgehalt $\geqslant$ 50 % aufweist, wobei

3. der resultierende gepfropfte Kautschuk eine mittlere Teilchengröße von 0,05-5 $\mu$m aufweist

C. 0-10 Gew.-Teilen eines harzartigen, thermoplastischen Copolymerisates aus einem Styrol-Acrylnitril- bzw. Methylmethacrylat-Acrylnitril-Copolymeren, das einen Staudinger Index [$\eta$] von $\geqslant$ 3 dl/g, besitzt und dessen [$\eta$]-Wert in jedem Fall über dem des im Grundpolymeren B. enthaltenden Copolymerisates liegt.

D. 5-40 Gew.-Teilen eines Copolymerisates aus

1. 10-99,9 Gew.-Teilen eines Acrylesters eines $C_1$-$C_{15}$-Alkohols,

2. 0-90 Gew.-Teilen wenigstens eines bi- oder polyfunktionellen Monomeren mit konjungierten oder unkonjungierten Doppelbindungen im Molekül und gegebenenfalls

3. bis zu 40 Gew.-%, bezogen auf die Summe von 1. und 2. weiterer Monomerer wie Acrylnitril, Vinylacetat und/oder Methacrylsäurealkylestern, die von $C_1$-$C_8$-Alkoholen abgeleitet sind,

wobei das Copolymerisat unvernetzt oder partiell vernetzt ist und wobei das Copolymerisat bzw. die unvernetzten Anteile des Copolymerisats mittlere Molekulargewichte im Bereich von 1 000-2 000 000 aufweisen, und

E. 3-30 Gew.-Teilen eines Copolymerisats, das hergestellt ist aus

1. 60-95 Gew.-Teilen eines Monomeren mit zwei konjugierten olefinischen Doppelbindungen und/oder eines Acrylesters eines $C_1$-$C_6$-Alkohols,

2. 5-40 Gew.-Teilen Styrol und/oder Acrylnitrils und/oder Methacrylsäuremethylester, gegebenenfalls

3. bis zu 10 Gew.-Teilen eines vernetzend wirkenden bis-oder polyfunktionellem Monomeren oder Polymeren mit konjugierten oder nicht konjugierten Doppelbindungen und

4. bis zu 30 Gew.-Teilen weiterer Monomeren wie z. B. Vinylacetat, (Meth)Acrylsäure Vinylether oder Methoxymethacrylamid,

wobei die Komponente E wenigstens in einem der Parameter: chemische Zusammensetzung, Versetzung, Gelgehalt, Quellungsindex von der Komponente D verschieden sein soll und wobei das Copolymerisat E einen Gelgehalt von ≥ 70 % aufweisen soll.

2. Formmassen gemäß Anspruch 1, dadurch gekennzeichnet, daß

a. als Komponente B ein Pfropfprodukt hergestellt wird durch die Copolymerisation von 60-95 Gew.-Teilen einer Styrol-Acrylnitril-Monomermischung (im Gew.-Verhältnis 75 : 25 bis 65 : 35) in Gegenwart von 40-5 Gew.-Teilen eines Polybutadienlatex bzw. Butadien-Styrol-70 : 30-Copolymerisatlatex, der eine mittlere Teilchengröße im Bereich von 0,1-0,5 μm aufweist und dessen Gelgehalt ≥ 50 % ist, und

b. die komponente C ein Copolymerisat aus 95-50 Gew.-% Methylmethacrylat und 5-50 Gew.-% Acrylnitril ist, das einen Staudinger-Index [η] von mehr als 3 dl/g, aufweist und dessen Staudinger Index über dem Staudinger-Index des bei der Herstellung der Komponente B. anfallenden Styrol-Acrylnitril-Copolymerisates liegt.

3. Formmassen gemäß Anspruch 1, dadurch gekennzeichnet, daß als Komponente D Copolymerisate aus

D1 10-99 Gew.-Teilen eines Acrylesters eines $C_1$-$C_8$-Alkohols,

D2 0-10 Gew.-Teilen eines bi- oder trifunktionellen Monomeren mit konjugierten oder unkonjugierten Doppelbindungen im Molekül und

D3 5-35 Gew.-%, bezogen auf die Summe von D1 und D2 Acrylnitril, Vinylacetat und/oder Methacrylsäure $C_1$-$C_4$-Alkylestern,

Verwendung finden.

4. Formmassen gemäß Anspruch 1, dadurch gekennzeichnet, daß als Komponente E Copolymerisate aus

E1 90-65 Gew.-Teilen Butadien und

E2 10-35 Gew.-Teilen Acrylnitril und/oder Copolymerisate aus

E1 60-95 Gew.-Teilen Acrylester eines aliphatischen $C_1$-$C_6$-Alkohols,

E2 5-40 Gew.-Teilen Acrylnitril, und

E3 bis zu 25 Gew.-Teilen Vinylacetat eingesetzt werden.

5. Verwendung von thermoplastischen Formmassen nach Anspruch 1 zur Herstellung von Folien.

**Claims**

1. Thermoplastic moulding compositions of

A. 25-50 parts by weight of a vinyl chloride homo- or copolymer having a content of at least 50 % by weight of vinyl chloride units,

B. 25-50 parts by weight of an ABS graft product produced by graft polymerisation of

1. 30-95 parts by weight of a monomer mixture of styrene, methyl methacrylate or α-methyl styrene, either individually or as mixtures, on the one hand, and acrylonitrile, on the other hand, in a ratio of 90 : 10 to 60 : 40, on to

2. 70-5 parts by weight of a butadiene homo- or copolymer having a comonomer content of ≤ 35 % by weight and a gel content of ≥ 50 %,

3. the resulting grafted rubber having an average particle size of 0.05-5 μm,

C. 0-10 parts by weight of a resinous, thermoplastic copolymer of a styrene/acrylonitrile or methyl methacrylate/acrylonitrile copolymer which has a Staudinger index [η] of ≥ 3 dl/g and of which the [η] value is in any case higher than that of the copolymer contained in the basic polymer B.

D. 5-40 parts by weight of a copolymer of

1. 10-99.9 parts by weight of an acrylic ester of a $C_1$-$C_{15}$ alcohol,

2. 0-90 parts by weight of at least one bi- or polyfunctional monomer containing conjugated or unconjugated double bonds in the molecule and, optionally,

3. up to 40 % by weight, based on the sum of 1. and 2., of other monomers such as acrylonitrile, vinyl acetate and/or methacrylic acid alkyl esters which are derived from $C_1$-$C_8$ alcohols,

the copolymer being uncross-linked or partially cross-linked and the copolymer or the uncross-linked parts of the copolymer having average molecular weights in the range 1 000-2 000 000, and

E. 3-30 parts by weight of a copolymer which is produced from

**0 101 904**

1. 60-95 parts by weight of a monomer containing two conjugated olefinic double bonds and/or of an acrylic ester of a $C_1$-$C_6$ alcohol,

2. 5-40 parts by weight of styrene and/or acrylonitrile and/or methacrylic acid methyl ester, optionally

3. up to 10 parts by weight of a cross-linking bi- or polyfunctional monomer or polymer containing conjugated or nonconjugated double bonds and

4. up to 30 parts by weight of other monomers such as, for example, vinyl acetate, (meth)acrylic acid, vinyl ethers or methoxymethacrylamide,

wherein component E should be different from component D in at least one of the parameters of chemical composition, cross-linkage, gel content and swelling index, and wherein the copolymer E should have a gel content of $\geqslant 70\%$.

2. Moulding compositions according to Claim 1, characterised in that

a. as component B a graft product is produced by the copolymerisation of 60-95 parts by weight of a styrene/acrylonitrile monomer mixture (in a weight ratio of 75 : 25 to 65 : 35) in the presence of 40-5 parts by weight of a polybutadiene latex or butadiene/styrene 70 : 30 copolymer latex which has an average particle size in the range 0.1-0.5 $\mu$m and of which the gel content is $\geqslant 50\%$, and

b. the component C is a copolymer of 95-50 % by weight of methyl methacrylate and 5-50 % by weight of acrylonitrile, which has a Staudinger Index [$\eta$] of more than 3 dl/g and of which the Staudinger Index is higher than the Staudinger Index of the styrene/acrylonitrile copolymer obtained in the production of component B.

3. Moulding compositions according to Claim 1, characterised in that copolymers of

D1 10-99 parts by weight of an acrylic ester of a $C_1$-$C_8$ alcohol,

D2 0-10 parts by weight of a bi- or trifunctional monomer containing conjugated or unconjugated double bonds in the molecule and

D3 5-35 % by weight, based on the sum of D1 and D2, of acrylonitrile, vinyl acetate and/or methacrylic acid $C_1$-$C_4$ alkyl esters,

are used as component D.

4. Moulding compositions according to Claim 1, characterised in that copolymers of

E1 90-65 parts by weight of butadiene and

E2 10-35 parts by weight of acrylonitrile and/or copolymers of

E1 60-95 parts by weight of acrylic esters of an aliphatic $C_1$-$C_6$ alcohol,

E2 5-40 parts by weight of acrylonitrile and

E3 up to 25 parts by weight of vinyl acetate are used as component E.

5. Use of thermoplastic moulding compositions according to Claim 1 for the production of films.

**Revendications**

1. Mélanges à mouler thermoplastiques formés de :

A. 25 à 50 parties en poids d'un homopolymère ou d'un copolymère de chlorure de vinyle ayant une teneur en motifs chlorure de vinyle d'au moins 50 % en poids,

B. 25 à 50 parties en poids d'un produit greffé ABS obtenu par polymérisation par greffage de

1. 30-95 parties en poids d'un mélange de monomères formé de styrène, de méthacrylate de méthyle ou d'$\alpha$-méthylstyrène, individuellement ou en mélanges, d'une part, et d'acrylonitrile, d'autre part, dans un rapport de 90 : 10 à 60 : 40, sur

2. 70 à 5 parties en poids d'un homopolymère ou d'un copolymère de butadiène, avec une teneur en comonomère égale ou inférieure à 35 % en poids qui présente une teneur en gel égale ou supérieure à 50 %,

3. le caoutchouc greffé résultant présentant une grosseur moyenne de particules de 0,05 à 5 $\mu$m

C. 0 à 10 parties en poids d'un copolymère thermoplastique du genre résine formé d'un copolymère styrène-acrylonitrile ou méthacrylate de méthyle-acrylonitrile qui possède un indice Staudinger [n] égal ou supérieur à 3 dl/g et dont la valeur [n] se situe dans chaque cas au-dessus de celle du copolymère contenu dans le polymère de base B.

D. 5 à 40 parties en poids d'un copolymère formé de

1. 10 à 99,9 parties en poids d'un ester acrylique d'un alcool en $C_1$ à $C_{15}$.

2. 0 à 90 parties en poids d'au moins un monomère bifonctionnel ou polyfonctionnel à doubles liaisons conjuguées ou non conjuguées dans la molécule et, le cas échéant,

3. jusqu'à 40 % en poids, par rapport à la somme de 1. et 2., d'autres monomères tels que l'acrylonitrile, l'acétate de vinyle et/ou des esters alkyliques d'acide méthacrylique qui sont dérivés d'alcools en $C_1$ à $C_8$,

le copolymère n'étant pas réticulé ou étant partiellement réticulé et le copolymère ou les parties non réticulées du copolymère présentant des poids moléculaires moyens dans l'intervalle de 1 000 à 2 000 000, et

E. 3 à 30 parties en poids d'un copolymère qui est produit à partir de

1. 60 à 95 parties en poids d'un monomère présentant deux doubles liaisons oléfiniques conjuguées et/ou d'un ester acrylique d'un alcool en $C_1$ à $C_6$,

2. 5 à 40 parties en poids de styrène et/ou d'acrylonitrile et/ou d'ester méthylique d'acide méthacrylique, le cas échéant

3. jusqu'à 10 parties en poids d'un monomère ou polymère bifonctionnel ou polyfonctionnel à effet réticulant, présentant des doubles liaisons conjuguées ou non conjuguées et

4. jusqu'à 30 parties en poids d'autres monomères tels que, par exemple, l'acétate de vinyle, l'acide (méth)acrylique, l'éther de vinyle ou le méthoxyméthacrylamide,

le composant E devant être différent du composant D au moins par l'un des paramètres composition chimique, réticulation, teneur en gel, indice de gonflement, et le copolymère E devant présenter une teneur en gel égale ou supérieure à 70 %.

2. Mélanges à mouler suivant la revendication 1, caractérisés en ce que

a. on prépare comme composant B un produit greffé par copolymérisation de 60 à 95 parties en poids d'un mélange de monomères styrène-acrylonitrile (dans le rapport en poids de 75 : 25 à 65 : 35) en présence de 40-5 parties en poids d'un latex de polybutadiène ou d'un latex de copolymère butadiène-styrène dans le rapport de 70 : 30, qui présente une grosseur moyenne de particules dans l'intervalle de 0,1 à 0,5 µm et dont la teneur en gel est égale ou supérieure à 50 %, et

b. le composant C est un copolymère de 95 à 50 % en poids de méthacrylate de méthyle et de 5 à 50 % en poids d'acrylonitrile qui présente un indice Staudinger [η] de plus de 3 dl/g et dont l'indice Staudinger est supérieur à celui du copolymère styrène-acrylonitrile obtenu dans la production du composant B.

3. Mélanges à mouler suivant la revendication 1, caractérisés en ce qu'on utilise comme composant D des copolymères de

D1 10 à 99 parties en poids d'un ester acrylique d'un alcool en $C_1$ à $C_8$,

D2 0 à 10 parties en poids d'un monomère bifonctionnel ou trifonctionnel dont la molécule présente des doubles liaisons conjuguées ou non conjuguées et

D3 5 à 35 % en poids, par rapport à la somme de D1 et D2, d'acrylonitrile, d'acétate de vinyle et/ou d'esters d'alkyle en $C_1$ à $C_4$ de l'acide méthacrylique.

4. Mélanges à mouler suivant la revendication 1, caractérisés en ce qu'on utilise comme composant E des copolymères de

E1 90 à 65 parties en poids de butadiène et

E2 10 à 35 parties en poids d'acrylonitrile et/ou des copolymères de

E1 60 à 95 parties en poids d'ester acrylique d'un alcool aliphatique en $C_1$ à $C_6$,

E2 5 à 40 parties en poids d'acrylonitrile, et

E3 jusqu'à 25 parties en poids d'acétate de vinyle.

5. Utilisation de matières à mouler thermoplastiques suivant la revendication 1 pour la production de feuilles.